# FASCICULE DE BREVET EUROPEEN

(11) **EP 4 070 442 B1**
(45) Date de publication et mention de la délivrance du brevet: **09.07.2025**
(21) Numéro de dépôt: 20812081.6
(22) Date de dépôt: 01.12.2020
(51) Int. Cl.: H02K 55/00, B64D 27/24, B64D 27/02, B64D 33/08

(54) **MACHINE ÉLECTRIQUE À BARRIÈRE DE FLUX À INDUIT ET INDUCTEUR SUPRACONDUCTEURS**
ELEKTRISCHE FLUXGATE-MASCHINE MIT SUPRALEITENDE ERREGER- UND ANKERWICKLUNG
FLUXGATE ELECTRIC MACHINE WITH SUPERCONDUCTIVE FIELD AND ARMATURE WINDINGS

(30) Priorité: 04.12.2019 FR 1913738
(43) Date de publication de la demande: 12.10.2022
(73) Titulaire: SAFRAN, 75015 Paris (FR); Université de Lorraine, 54052 Nancy (FR)
(72) Inventeur: AYAT, Sabrina Siham, 77550 MOISSY CRAMAYEL (FR); COLLE, Alexandre, 77550 MOISSY CRAMAYEL (FR); BIAUJAUD, Rémy, 77550 MOISSY CRAMAYEL (FR)
(74) Mandataire: Casalonga
(86) Numéro de dépôt international: PCT/EP2020/084003
(87) Numéro de publication internationale: WO 2021/110618

(56) Documents cités:
- FR-A1- 2 422 280
- US-A- 3 564 307
- US-A- 3 673 444
- US-A1- 2007 052 304
- US-A1- 2012 019 090
- US-A1- 2019 009 917

## Description

### Domaine technique de l'invention

La présente invention se rapporte aux machines électriques supraconductrices à barrière de flux et, plus particulièrement, aux machines électriques supraconductrices à flux axial ou radial utilisant des pastilles supraconductrices pour moduler le champ magnétique créé par l'inducteur de la machine électrique, tel que divulgués par les documents US 3,564,307, US 3,673,444, FR 2 422 280, US 2007/052304 A1, US 2019/009917 A1, ou US 2012/019090 A1.

Une application particulièrement intéressante de l'invention concerne les turbomachines destinées à l'alimentation de réseaux de bord d'aéronefs en énergie électrique.

### Etat de la technique antérieur

Les systèmes de propulsion pour aéronef électrique ou hybride nécessitent l'utilisation de moteurs électriques capables de rivaliser avec, voire dépasser, les performances des moteurs thermiques.

Les machines électriques destinées à la propulsion des avions électriques nécessitent d'être capables de fournir des densités de puissance électrique supérieures à environ 20kW par kg.

Dans ce contexte, l'utilisation de machines supraconductrices est avantageuse pour pouvoir atteindre ces niveaux de densité de puissance.

En effet, lorsqu'ils sont refroidis à une température inférieure à leur température critique, les matériaux supraconducteurs ont une résistivité nulle, qui permet une circulation des courants continus sans perte. A cette température, ils présentent également une réponse diamagnétique pour toute variation du champ magnétique.

L'absence de résistivité des matériaux supraconducteurs à une température inférieure à leur température critique permet d'augmenter la densité de courant circulant dans les conducteurs.

En effet, l'absence de perte par effet Joule dans les conducteurs supraconducteurs permet d'éviter une augmentation linéaire des besoins en refroidissement avec l'augmentation de la puissance des moteurs électriques supraconducteurs. Il reste néanmoins nécessaire de les refroidir à des températures inférieures à leur température critiques, typiquement inférieures à 100 K.

Les machines électriques comprennent généralement un ou plusieurs induits et un ou plusieurs inducteurs. L'induit comporte généralement un agencement de bobines électromagnétiques et une culasse dotée d'une couronne de fer. Dans le cas d'une machine à flux axial, l'inducteur peut comporter une bobine supraconductrice coaxiale à l'agencement des bobines électromagnétiques de l'induit et des pastilles disposées radialement à l'intérieur de la bobine supraconductrice.

L'absence de perte par effet Joule, due à la résistivité nulle des matériaux supraconducteurs à des températures inférieures à leur température critique, n'est vraie que pour la composante continue du courant d'excitation.

En courant alternatif, les pertes dans les conducteurs supraconducteurs ne sont plus négligeables et, si la vitesse de rotation de la machine est trop élevée, les pertes peuvent être très élevées et le rendement de la machine est potentiellement fortement réduit.

Les génératrices supraconductrices selon l'état de la technique à barrière de flux comportent, en particulier pour les applications à vitesse de rotation élevée, typiquement supérieure à 1000 tours par minute, une structure partiellement supraconductrice, avec un ou plusieurs induits formés de bobines électromagnétiques réalisées à base de conducteurs en matériaux non supraconducteurs, tels que le cuivre ou l'aluminium.

Bien qu'une telle structure permette de placer l'induit hors de l'enceinte cryogénique de la machine, et donc de limiter l'énergie utilisée pour le refroidissement, une telle structure, qui comprend une alternance de régions supraconductrices et de régions non supraconductrices complexifie la mise en œuvre de la machine.

En tout état de cause, une telle structure présente une limitation de la densité de courant circulant dans les conducteurs et, par conséquent, la densité de puissance de la machine.

Au vu de ce qui précède, la présente invention a pour objectif de proposer une machine électrique supraconductrice à barrière de flux capable d'améliorer la densité de puissance électrique fournie et ce, dans un encombrement réduit et avec une réalisation simple.

### Exposé de l'invention

L'invention a donc pour objet une machine électrique supraconductrice à barrière de flux, comprenant un induit et un inducteur, l'un de l'induit ou de l'inducteur logeant un rotor et une bobine inductrice supraconductrice, et l'autre comprenant un agencement de bobines électromagnétiques coaxial à la bobine inductrice supraconductrice, le rotor comprenant des pastilles supraconductrices montées radialement à l'intérieur de la bobine supraconductrice sur un axe de rotation de la machine.

Les bobines électromagnétiques sont réalisées en matériau supraconducteur, l'induit et l'inducteur étant disposés dans un ensemble formant enceinte de refroidissement doté de moyens de refroidissement spécifiques aux éléments supraconducteurs de l'induit et de l'inducteur.

Ainsi, l'induit et l'inducteur sont réalisés en matériau supraconducteur, permettant une augmentation de la puissance de la machine.

En outre, il n'est plus nécessaire de doter la machine d'une culasse en matériau ferromagnétique classiquement utilisée pour guider le flux pour reboucler les lignes de champs magnétique, permettant une réduction de la masse de la machine.

Toutefois, dans un mode de réalisation, la machine peut comporter une culasse statorique dotée d'au moins une couronne de fer.

Par exemple, les bobines électromagnétiques de l'induit comportent des filaments torsadés comprenant du MgB2 dans une matrice de titane.

Dans un mode de réalisation, l'induit et l'inducteur sont disposés dans une enceinte cryogénique de refroidissement commune.

Le refroidissement de l'induit et de l'inducteur peut ainsi être mutualisé, un système de refroidissement cryogénique unique pouvant être utilisé, permettant ainsi de simplifier la réalisation de la machine.

En variante, l'ensemble formant l'enceinte de refroidissement comprend une première enceinte cryogénique dans laquelle est placée la bobine inductrice supraconductrice et une deuxième enceinte cryogénique dans laquelle sont placés ledit au moins un inducteur et ledit au moins un induit.

Selon encore un autre mode de réalisation, l'ensemble formant enceinte de refroidissement comporte une première enceinte cryogénique dans laquelle est placée la bobine supraconductrice et des enceintes cryogéniques dans lesquelles sont respectivement placés le rotor dudit au moins un inducteur et ledit au moins un induit.

Dans les divers modes de réalisation envisagés, ledit ensemble formant enceinte de refroidissement peut comprendre au moins une enceinte sous vide. De préférence au moins une telle enceinte sous vide est prévue dans laquelle est placée le rotor dudit au moins un inducteur, de sorte que les pertes par frottement sont réduites.

La machine peut en outre comporter des moyens de refroidissement par conduction.

La machine peut encore être dotée d'un ensemble d'enceintes emplies d'un cryogène.

L'invention a encore pour objet, selon un autre aspect, un aéronef comprenant au moins une turbomachine comprenant une machine électrique telle que définie ci-dessus.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :

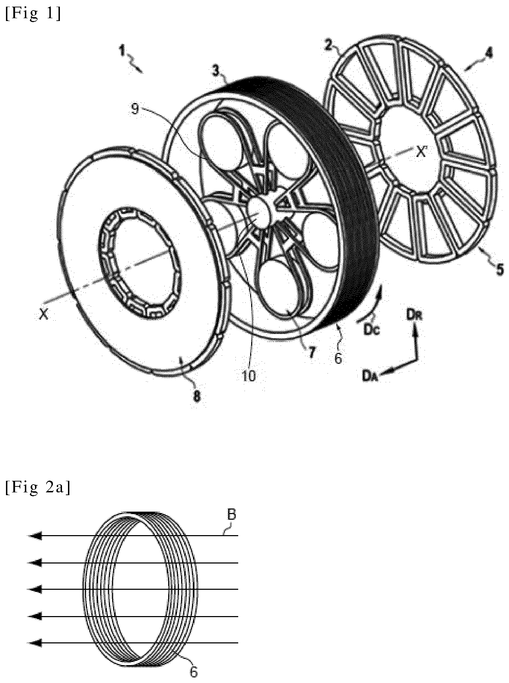

[Fig 1] illustre schématiquement l'architecture générale d'une machine électrique supraconductrice à barrière de flux conforme à l'invention ;
[Fig 2a]
[Fig 2b] illustrent le fonctionnement de la machine de la figure 1 ;
[Fig 3] montre la variation du champ magnétique engendrée par la rotation des pastilles supraconductrices de l'inducteur ;
[Fig 4] montre un exemple de réalisation du fil supraconducteur des bobines électromagnétiques de l'induit ;
[Fig 5] montre l'évolution des pertes par hystérésis dans le filament supraconducteur de l'agencement de bobines électromagnétiques de l'induit en fonction de la densité de courant dans le fil, pour divers nombres de filaments ;
[Fig 6] est une courbe montrant l'évolution de la puissance normalisée en fonction de l'entrefer de la machine ;
[Fig 7]
   et

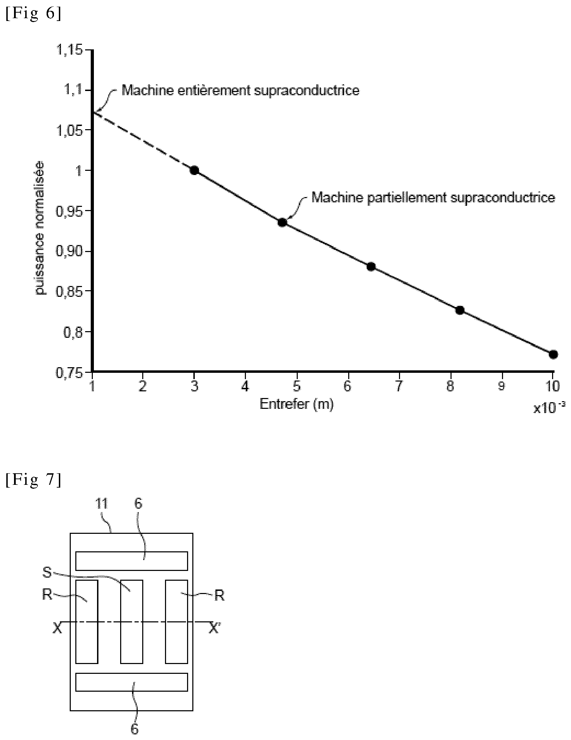

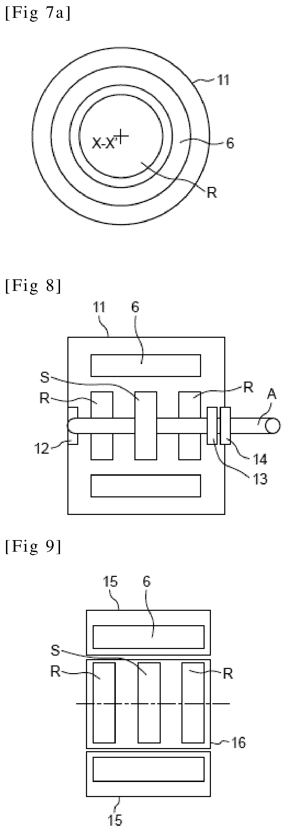

[Fig 7a] illustrent schématiquement un premier exemple de réalisation d'une machine électrique supraconductrice conforme à l'invention ;
[Fig 8] illustre schématiquement un mode de mise en œuvre de la machine des figures 7 et 7a ;
[Fig 9] illustre un deuxième mode de réalisation d'une machine électrique supraconductrice conforme à l'invention et

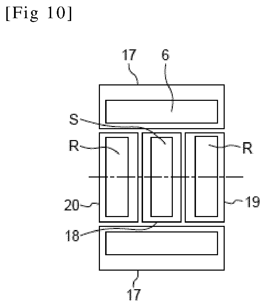

[Fig 10] illustre un deuxième mode de réalisation d'une machine électrique supraconductrice conforme à l'invention.

### Exposé détaillé d'au moins un mode de réalisation

Sur la figure 1 est représentée schématiquement une machine électrique supraconductrice à barrière de flux selon un mode de réalisation, désignée par la référence numérique générale 1.

La machine électrique 1 comprend un induit 2 et un inducteur 3. Dans divers modes de réalisation et de mise en œuvre, la machine 1 peut être une machine électrique à barrière de flux à flux axial ou à flux radial et peut fonctionner en mode moteur, dans lequel elle est alimentée en électricité pour fournir une force rotative motrice, ou en mode générateur, dans lequel elle est entraînée en rotation pour fournir de l'énergie électrique. Dans le mode de réalisation décrit dans la suite de la description, la machine électrique 1 est une machine électrique à flux axial, et fonctionne en mode générateur. L'induit 2 est formé par le stator de la machine électrique et la partie rotative de l'inducteur 3 forme le rotor de la machine électrique.

On notera que la machine 1 peut comporter plusieurs stators, par exemple au nombre de deux, seul l'un des stators étant illustré sur la figure 1.

L'induit 2 comporte un agencement 4 annulaire de plusieurs bobines électromagnétiques 5 fixes définissant une direction axiale D_{A}, une direction circonférentielle D_{C} et une direction radiale D_{R}.

L'inducteur 3 comporte une bobine supraconductrice 6 fixe coaxiale à l'agencement des bobines électromagnétiques 4 de l'induit et des pastilles supraconductrices 7 rotoriques disposées dans un même plan orthogonal à la direction axiale D_{A} et radialement à l'intérieur de la bobine supraconductrice 6, et est fermé par une culasse statorique optionnelle comportant une couronne de fer 8.

Les pastilles supraconductrices 7 sont chacune montées sur un support 9 lié à un arbre de rotation 10 de la machine, s'étendant selon un axe X-X' parallèle à la direction axiale D_{A}. Les pastilles supraconductrices 7 ont dans l'exemple illustrée une forme de disque circulaire, mais elles peuvent avoir d'autres formes comme par exemple, en secteur d'anneau et l'invention s'étend à toutes ces formes de réalisation des pastilles.

Les pastilles supraconductrices sont configurées pour former des barrières de flux ou des aimants permanents en matériau supraconducteur. Elles sont réparties avantageusement dans la direction ortho-radiale de la machine supraconductrice, ce qui permet une variation spatiale du champ électromagnétique dans l'entrefer. Ces pastilles peuvent avantageusement être espacées de façon à ce que l'angle d'ouverture des pastilles représente entre 60 et 70 % de l'angle d'ouverture total d'une paire de pôles, permettant une optimisation de la modulation de flux. Chaque paire de pôles est constituée par une pastille supraconductrice 7 et l'espace entre cette pastille supraconductrice et la suivante.

La bobine supraconductrice 6 de l'inducteur 3 est une bobine supraconductrice statique alimentée en courant continu et la culasse statorique assure une tenue mécanique des bobines.

Toutefois, cette culasse peut être omise afin de réduire la masse de la machine.

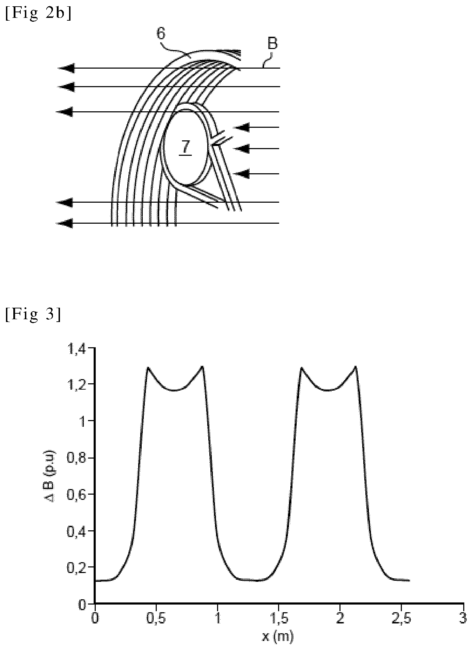

En référence aux figures 2a et 2b, une telle machine électrique supraconductrice à barrière de flux fonctionne de la façon suivante.

En premier lieu, l'alimentation de la bobine supraconductrice 6 en courant continu provoque l'apparition d'un champ magnétique B intense. Les pastilles supraconductrices 7 rotatives provoquent une variation du champ magnétique, le champ magnétique étant arrêté par les pastilles en raison de leur réponse diamagnétique (figure 2b).

Les bobines électromagnétiques de l'agencement de bobines sont exposées à ce champ magnétique variable B créé par la rotation du rotor. Une force électromotrice est alors générée.

La variation de la composante axiale de l'induction magnétique dans la machine en fonction de la position angulaire du rotor est visible sur la figure 3.

Les bobines de l'agencement de bobines de l'induit sont réalisées en matériau supraconducteur. Ainsi, l'inducteur et l'induit de la machine sont tous deux réalisés en matériau supraconducteur.

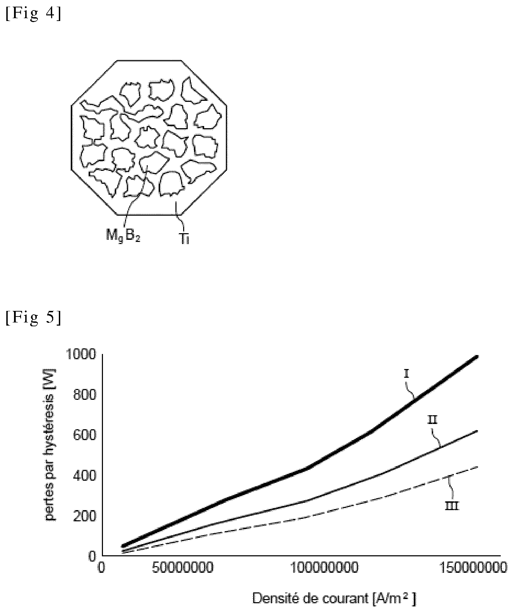

En référence à la figure 4, par exemple, les bobines de l'agencement de bobines de l'induit sont réalisées à partir d'un conducteur multifilaments comprenant par exemple plusieurs filaments dans une matrice résistive appropriée pour réduire les courants de Foucault. Par exemple, le nombre de filaments peut varier entre 20 et 100, la matrice résistive étant par exemple réalisée en titane. Avantageusement, les filaments sont en MgB2 torsadé.

Il a été constaté qu'un tel conducteur multifilaments permettait de réduire les pertes dans des applications à courant alternatif (figure 5).

Il a en effet été constaté que l'utilisation d'un tel conducteur multifilaments permettait d'obtenir des pertes par hystérésis de 55, 35 et 25 watts pour des fils comportant des brins de 20 filaments (courbe I), 50 filaments (courbe II) et 100 filaments (courbe III), respectivement.

Par ailleurs, la machine selon l'invention, comprenant un inducteur et un induit supraconducteurs permet une réduction de l'entrefer.

Comme indiqué précédemment, grâce à la réalisation de l'inducteur et de l'induit en matériau supraconducteur, l'inducteur et l'induit peuvent être placés dans une enceinte cryogénique commune équipée de moyens de refroidissement spécifiques à chacun des éléments supraconducteurs.

Le fait de placer l'inducteur et l'induit dans une même enceinte permet de réduire l'épaisseur de l'entrefer à une épaisseur correspondant aux machines conventionnelles. Comme visible sur la figure 6, qui illustre l'évolution de la puissance d'une machine supraconductrice en fonction de l'épaisseur de l'entrefer, la réduction de l'entrefer permet une augmentation de la puissance de la machine de l'ordre de 15%. En augmentant la densité de courant, l'augmentation de la puissance de la machine peut alors dépasser 100%.

On a représenté sur les figures 7 et 7a un exemple de réalisation d'une machine électrique supraconductrice comprenant une enceinte cryogénique 11 de refroidissement commune, respectivement de profil et de face.

Dans cet exemple de réalisation, la machine électrique 1 comporte un unique stator S et deux rotors R placés de part et d'autre du stator. Bien entendu, un agencement à deux stators et un stator pourrait également être prévu.

Cette enceinte est dotée de moyens de refroidissement spécifiques à chaque élément supraconducteur de la machine électrique, qui sont destinés à maintenir la température de chacun de ces éléments inférieure à leur température critique. Ces moyens de refroidissement sont notamment destinés à refroidir simultanément les éléments supraconducteurs de la machine de manière à les refroidir à une température inférieure à la température critique de ces éléments la plus basse.

Dans un mode de réalisation, le refroidissement est obtenu en mettant sous vide l'enceinte cryogénique 11 afin d'empêcher tout transfert de chaleur par convection entre le rotor, l'induit et la bobine inductrice 6. En outre, afin de limiter les échanges par radiation entre ces éléments, des moyens pour limiter ces échanges peuvent être prévus, par exemple en réalisant ces éléments de couleur noire.

En outre, des moyens de refroidissement par conduction de chaque élément peuvent être prévus, par exemple par mise en contact avec un élément solide froid.

En variante, un fluide cryogène peut être injecté dans l'enceinte cryogénique 11 pour refroidir directement les divers éléments placés dans l'enceinte par convection.

Par exemple, un cryogène à base d'hélium pourra être utilisé.

En référence à la figure 8, sur laquelle on voit que l'arbre A supportant les rotors R est supporté par deux paliers 12 et 13, une garniture d'étanchéité 14 est prévue afin d'éviter les fuites de cryogène.

Dans le mode de réalisation qui vient d'être décrit dans lequel les éléments supraconducteurs de la machine sont placés dans une enceinte cryogénique commune, les moyens de refroidissement communs assurent le refroidissement de l'ensemble de ces éléments à une même température inférieure à la température critique la plus basse.

Dans un deuxième mode de réalisation visible sur la figure 9, la machine comporte deux enceintes cryogéniques de refroidissement 15 et 16 à l'intérieur desquelles sont respectivement placés la bobine inductrice supraconductrice 6, d'une part, et les rotors et le stator, d'autre part.

Comme dans le mode de réalisation décrit précédemment, chaque enceinte est associée à des moyens de refroidissement spécifiques aux éléments supraconducteurs qu'elle contient afin de refroidir ces éléments spécifiquement à une température inférieure à leur température critique.

Ces moyens de refroidissement peuvent consister soit à une mise sous vide de l'enceinte, combinée le cas échéant à des moyens pour réduire l'émissivité des matériaux et à des moyens de refroidissement par conduction, ou consister à injecter un cryogène dans chaque enceinte afin de refroidir les éléments directement. On peut avantageusement prévoir qu'au moins le (ou les) rotor(s) sont placés dans une enceinte de refroidissement mise sous vide, permettant de réduire les pertes par frottement.

Bien entendu, des moyens d'étanchéité pourront également être prévus pour limiter les fuites de cryogène.

En se référant enfin à la figure 10, l'ensemble d'enceintes peut comporter plusieurs enceintes 17, 18, 19 et 20 dans lesquelles sont respectivement placés la bobine inductrice supraconductrice 6, les rotors R et le stator S.

Comme indiqué précédemment, chaque enceinte est dotée de moyens de refroidissement par mise sous vide combinée, le cas échéant, à des moyens pour réduire l'émissivité des matériaux et des moyens de refroidissement par conduction ou par injection d'un cryogène pour le refroidissement des éléments supraconducteurs par convection. Comme précédemment, des moyens d'étanchéité pourront être prévus pour chaque enceinte cryogénique.

On notera enfin que les modes de réalisations des figures 7 à 10 s'applique également à des agencements dans lesquels l'inducteur et l'induit comprennent un nombre quelconque de rotors et de stators.

## Revendications

1. Machine électrique supraconductrice à barrière de flux, comprenant un induit (2), un inducteur (3), l'inducteur (3) comprenant une bobine inductrice supraconductrice (6) et une partie rotative formant un rotor (R), et l'induit comprenant un agencement (4) de bobines électromagnétiques (5) coaxial à la bobine inductrice supraconductrice (6), le rotor (R) comprenant des pastilles supraconductrices (7) montées radialement à l'intérieur de la bobine supraconductrice (6) sur un axe de rotation de la machine, les pastilles supraconductrices (7) étant réparties dans la direction ortho-radiale de la machine électrique et configurées pour former des barrières de flux, **caractérisée en ce que** les bobines électromagnétiques (5) sont réalisées en matériau supraconducteur et **en ce que** l'induit(2) et l'inducteur(3) sont disposés dans un ensemble formant enceinte de refroidissement (11 ;15, 16 ; 17, 18, 19, 20) doté de moyens de refroidissement spécifiques à chacun des éléments supraconducteurs de l'induit (2) et de l'inducteur (3), les bobines électromagnétiques (5) comprenant des filaments torsadés comprenant du MgB2 dans une matrice de titane.

2. Machine selon la revendication 1, comprenant en outre une culasse statorique (8) dotée d'au moins une couronne de fer.

3. Machine selon l'une des revendications 1 et 2, dans laquelle l'induit (2) et l'inducteur (3) sont disposés dans une enceinte cryogénique de refroidissement commune.

4. Machine selon l'une des revendications 1 et 2, dans laquelle l'ensemble formant enceinte de refroidissement comprend une première enceinte cryogénique (15) dans laquelle est placée la bobine inductrice supraconductrice (6) et une deuxième enceinte (16) cryogénique dans laquelle sont placés ledit au moins un inducteur (3) et ledit au moins un induit (2).

5. Machine selon l'une des revendications 1 et 2, dans laquelle l'ensemble formant enceinte de refroidissement comprend une première enceinte cryogénique (17) dans laquelle est placée la bobine supraconductrice (6) et des enceintes cryogéniques (18, 19, 20) dans lesquelles sont respectivement placés ledit au moins un inducteur (3) et ledit au moins un induit (2).

6. Machine selon l'une quelconque des revendications 1 à 5, dans laquelle l'ensemble formant enceinte de refroidissement comprend au moins une enceinte sous vide.

7. Machine selon la revendication 6, comprenant en outre des moyens de refroidissement par conduction.

8. Machine selon l'une quelconque des revendications 1 à 7 dans laquelle ledit ensemble formant enceinte de refroidissement est empli d'un cryogène.

9. Aéronef comprenant au moins une turbomachine comprenant une machine électrique selon l'une quelconque des revendications 1 à 8.

## Patentansprüche

1. Supraleitende elektrische Maschine mit Flussbarriere, umfassend einen induziertes Element (2) und einen Induktor (3), wobei der Induktor (3) eine supraleitende Induktionsspule (6) und einen rotierenden Teil, der einen Rotor (R) bildet, umfasst, und der induziertes Element eine Anordnung (4) von elektromagnetischen Spulen (5) koaxial zur supraleitenden Induktionsspule (6) umfasst, wobei der Rotor (R) supraleitende Kügelchen (7) umfasst, die radial innerhalb der supraleitenden Spule (6) auf einer Drehachse der Maschine montiert sind, wobei die supraleitenden Kügelchen (7) in orthoradialer Richtung der elektrischen Maschine verteilt und so eingerichtet sind, dass sie Flussbarrieren bilden, **dadurch gekennzeichnet, dass** die elektromagnetischen Spulen (5) aus supraleitendem Material hergestellt sind und dass der induziertes Element (2) und der Induktor (3) in einer eine Kühlkammer (11; 15, 16; 17, 18, 19, 20) bildenden Baugruppe angeordnet sind, die mit Kühlmitteln ausgestattet ist, die für jedes der supraleitenden Elemente des induziertes Element (2) und des Induktors (3) spezifisch sind, wobei die elektromagnetischen Spulen (5) verdrillte Filamente umfassen, die MgB2 in einer Titanmatrix umfassen.

2. Maschine nach Anspruch 1, die ferner ein Statorjoch (8) mit mindestens einer Eisenkrone umfasst.

3. Maschine nach einem der Ansprüche 1 und 2, wobei das induzierte Element (2) und der Induktor (3) in einer gemeinsamen Kryokühlkammer angeordnet sind.

4. Maschine nach einem der Ansprüche 1 und 2, wobei die eine Kühlkammer bildende Baugruppe eine erste Kryokammer (15), in der die supraleitende Induktionsspule (6) platziert ist, und eine zweite Kryokammer (16) umfasst, in der der mindestens eine Induktor (3) und der mindestens ein induziertes Element (2) platziert sind.

5. Maschine nach einem der Ansprüche 1 und 2, wobei die eine Kühlkammer bildende Baugruppe eine erste Kryokammer (17), in der die supraleitende Spule (6) platziert ist, und Kryokammern (18, 19, 20) umfasst, in denen jeweils der mindestens eine Induktor (3) und der mindestens ein induziertes Element (2) platziert sind.

6. Maschine nach einem der Ansprüche 1 bis 5, wobei die eine Kühlkammer bildende Baugruppe mindestens eine Vakuumkammer umfasst.

7. Maschine nach Anspruch 6, die ferner leitfähige Kühlmittel umfasst.

8. Maschine nach einem der Ansprüche 1 bis 7, wobei die eine Kühlkammer bildende Baugruppe mit einem Kryogen gefüllt ist.

9. Luftfahrzeug, das mindestens eine Turbomaschine umfasst, die eine elektrische Maschine nach einem der Ansprüche 1 bis 8 umfasst.

## Claims

1. A flux barrier superconductive electric machine, comprising an induced element (2), an inductor (3), the inductor (3) comprising a superconductive induction coil (6) and a rotating part forming a rotor (R), and the induced element comprising an arrangement (4) of electromagnetic coils (5) coaxial to the superconductive induction coil (6), the rotor (R) comprising superconductive pellets (7) radially mounted inside the superconductive coil (6) on an axis of rotation of the machine, the superconductive pellets (7) being distributed in the ortho-radial direction of the electric machine and configured to form flux barriers, **characterised in that** the electromagnetic coils (5) are made of superconductive material and **in that** the induced element (2) and the inductor (3) are disposed in a cooling enclosure assembly (11; 15, 16; 17, 18, 19, 20) provided with cooling means specific to each of the superconductive elements of the induced element (2) and of the inductor (3), the electromagnetic coils (5) comprising twisted filaments comprising MgB2 in a titanium matrix.

2. The machine according to claim 1, further comprising a stator yoke (8) provided with at least one iron crown.

3. The machine according to one of claims 1 and 2, wherein the induced element (2) and the inductor (3) are disposed in a common cryogenic cooling enclosure.

4. The machine according to one of claims 1 and 2, wherein the cooling enclosure assembly comprises a first cryogenic enclosure (15) in which the superconductive induction coil (6) is placed and a second cryogenic enclosure (16) in which said at least one inductor (3) and said at least one induced element (2) are placed.

5. The machine according to one of claims 1 and 2, wherein the cooling enclosure assembly comprises a first cryogenic enclosure (17) in which the superconductive coil (6) is placed and cryogenic enclosures (18, 19, 20) in which said at least one inductor (3) and said at least one induced element (2) are respectively placed.

6. The machine according to any of claims 1 to 5, wherein the cooling enclosure assembly comprises at least one vacuum enclosure.

7. The machine according to claim 6, further comprising conduction cooling means.

8. The machine according to any of claims 1 to 7, wherein said cooling enclosure assembly is filled with a cryogen.

9. An aircraft comprising at least one turbomachine comprising an electric machine according to any of claims 1 to 8.
